# EUROPÄISCHE PATENTSCHRIFT

(11) **EP 0 595 010 B1**
(45) Veröffentlichungstag und Bekanntmachung des Hinweises auf die Patenterteilung: **19.08.1998**
(21) Anmeldenummer: 93114896.9
(22) Anmeldetag: 16.09.1993
(51) Int. Cl.: G06K 7/01

(54) **Vorrichtung zum Halten einer Chipkarte**
Device for holding a chipcard
Dispositif pour retenir une carte à puce

(30) Priorität: 22.10.1992 DE 4235695
(43) Veröffentlichungstag der Anmeldung: 04.05.1994
(73) Patentinhaber: COPYGUARD ELECTRONIK GmbH, D-65366 Geisenheim 2 (DE)
(72) Erfinder: Bradbury, G. Roland, Dr., D-65366 Geisenheim 2 (DE)
(74) Vertreter: Munk, Ludwig, Dipl.-Ing.

(56) Entgegenhaltungen:
- GB-A- 2 258 748
- US-A- 4 743 746
- US-A- 4 931 622

## Beschreibung

Die Erfindung betrifft eine Vorrichtung gemäß Oberbegriff des Anspruchs 1.

Eine Vorrichtung dieser Art ist aus der US-A 4 743 746 bekannt. Bei dieser bekannten Anordnung sind die beiden Maulteile als Unterteil und hiervon distanziertes Oberteil einer schwenkbaren Klappe ausgebildet. Das Unterteil und das Oberteil dieser Klappe sind jedoch nicht gegeneinander bewegbar, so daß der hiervon begrenzte. Spalt zur Aufnahme der Chipkarte nicht geöffnet oder geschlossen werden kann. Die schwenkbare Klappe ist in einem über einen Schlitz in der Rückwand zugänglichen Gehäuse angeordnet. Die Klappe wird mittels einer Torsionsfeder in eine Ausgangsstellung gebracht, in welcher der Spalt zwischen Unter- und Oberteil der Klappe über den gehäuseseitigen Schlitz zugänglich ist. Zum Verhindern einer unzulässigen Entnahme einer eingelegten Chipkarte wird die Klappe nach dem Einlegen einer Chipkarte in eine Stellung geschwenkt, in welcher der Spalt zwischen Unter- und Oberteil der Klappe über den gehäuseseitigen Schlitz nicht zugänglich ist. Bei dieser bekannten Anordnung besteht die Gefahr, daß die Chipkarte in Folge der fehlenden Einsehbarkeit des Spalts zwischen Unter- und Oberteil der Klappe nicht in diesen Spalt gelangt, sondern hieran vorbei geschoben wird. Die bekannte Anordnung erweist sich daher als umständlich und störanfällig.

Hiervon ausgehend ist es daher die Aufgabe der vorliegenden Erfindung, eine Vorrichtung eingangs erwähnter Art so zu verbessern, daß trotzt eines einfachen und kostengünstigen Aufbaus eine hohe Funktionssicherheit und Störungsfreiheit gewährleistet ist.

Diese Aufgabe wird durch die kennzeichnenden Merkmale des Anspruchs 1 gelöst.

Diese Maßnahmen stellen sicher, daß die das Einlegemaul bildenden Maulteile nicht komplett in einem Gehäuse angeordnet sein müssen, sondern über einen Gehäuseschlitz aus dem Gehäuse heraus ragen können, was die Zugänglichkeit und Einsehbarkeit verbessert. Dieser Vorteil wird dadurch noch verstärkt, daß das Einlegemaul geöffnet und geschlossen werden kann. Es ergibt sich daher eine hohe Bedienungsfreundlichkeit. Dennoch ist sichergestellt, daß ein unbefugtes Zurückziehen einer eingelegten Chipkarte ausgeschlossen ist. Nach dem Einlegen der Chipkarte schließt das Einlegemaul automatisch, wodurch die Chipkarte formschlüssig eingesperrt wird. Diese Einsperrung wird erst wieder aufgehoben, wenn der Kommunikationsvorgang beendet ist. Folglich sind in vorteilhafter Weise ein sowohl für die Chipkarte als auch für die Abtasteinrichtung schonender Betrieb sowie eine exakte und vollständige Informationsübertragung gewährleistet, was z.B. eine exakte Kontenführung ermöglicht und Betrugsabsichten vereitelt.

Vorteilhafte Ausgestaltungen und zweckmäßige Fortbildungen der übergeordneten Maßnahmen sind in den Unteransprüchen angegeben und aus der nachstehenden Beispielsbeschreibung anhand der Zeichnung näher entnehmbar.

In der nachstehend beschriebenen Zeichnung zeigen:
- Figur 1: eine Seitenansicht einer erfindungsgemäßen Vorrichtung teilweise im Schnitt und
- Figur 2: eine Draufsicht auf die Anordnung gemäß Figur 1 teilweise im Schnitt.

Die der Zeichnung zugrundeliegende Einrichtung zum Abtasten sogenannter Chipkarten, die im unbewegten Zustand abgetastet werden, enthält einen Lesekopf 1, der auf was beispielsweise eine exakte Kontenführung etc. ermöglicht.

Vorteilhafte Ausgestaltungen und zweckmäßge Weiterbildungen der übergeordneten Maßnahmen sind in den Unteransprüchen angegeben. So kann das untere Maulteil stationär angeordnet und mit das obere, bewegbare Maulteil in der angenäherten Stellung flankierenden, seitlichen Randstegen, sowie mindestens einem hinteren, eine Sperrklaue bildenden Randsteg versehen sein. Diese Maßnahmen ergeben eine zuverlässige, den hinteren Griffbereich einer eingelegten Chipkarte allseitig umfassende Sperreinrichtung. Die seitlichen Randstege fungieren gleichzeitig als Kartenführung beim Einführvorgang.

Eine weitere, zweckmäßige Maßnahme kann darin bestehen, daß das bewegbare Maulteil als schwenkbar angeordnete Klappe ausgebildet ist. Dies ermöglicht einen einfachen Aufbau der zum Schwenken benötigten Stelleinrichtung.

In weiterer vorteilhafter Fortbildung der übergeordneten Maßnahmen kann das schwenkbare Maulteil auf einer zum anderen Maulteil parallelen Achse schwenkbar gelagert und mit wenigstens einem über die Achse hinausreichenden Ansatz versehen sein, an dem eine Stelleinrichtung angreift, mittels der das schwenkbare Maulteil in der gewünschten Weise verschwenkbar ist. Diese Maßnahmen ergeben praktisch eine zweiarmige Klappenausbildung, die eine einfache und robuste Bauweise sowie eine sinnfällige Steuerung ermöglicht.

Eine weitere besonders zu bevorzugende Maßnahme kann darin bestehen, daß auf einem Ansatz des schwenkbaren Maulteils eine schwenklagerachsparallele Welle aufgenommen ist, die einerseits mittels eines Motors antreibbar ist und andererseits einen Exzenterzapfen trägt, der unter der Wirkung einer Anstellfeder an einem stationären Auflager in Anlage haltbar ist. Diese Maßnahmen stellen sicher, daß die Drehrichtung des Motors nicht umgekehrt werden muß. Dieser kann vielmehr in einer Richtung drehen und ist lediglich ein- und auszuschalten, was den Aufbau ebenfalls sehr vereinfachen kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung entnehmbar.

Nachstehend wird ein Ausführungsbeispiel der Erfindung anhand der Zeichnung näher erläutert.

Hierbei zeigen:

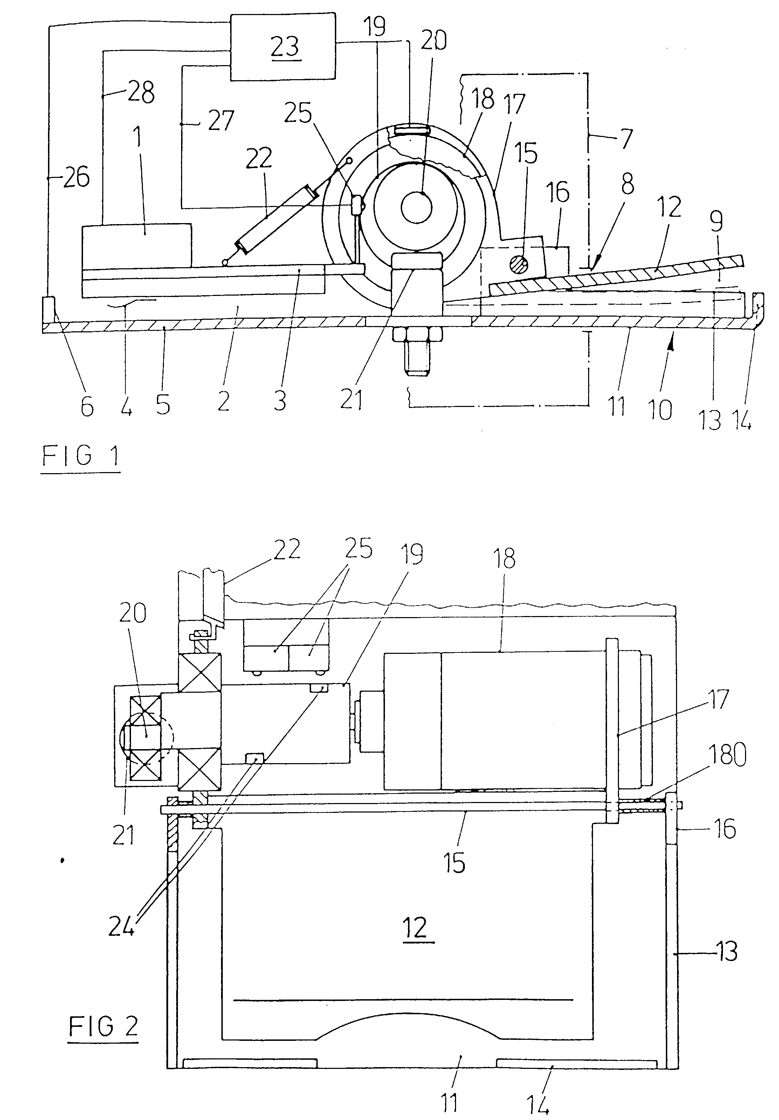

- Figur 1: eine Seitenansicht einer erfindungsgemäßen Vorrichtung teilweise im Schnitt und
- Figur 2: eine Draufsicht auf die Anordnung gemäß Figur 1 teilweise im Schnitt.

Die der Zeichnung zugrundeliegende Einrichtung zum Abtasten sogenannter Chipkarten, die im unbewegten Zustand abgetastet werden, enthält einen Lesekopf 1, der auf einer einen Aufnahmeraum 2 für das vordere Kartenende übergreifenden Platine 3 aufgenommen ist. Diese ist mit durch Federbügel gebildeten Niederhaltern 4 versehen, durch die eine eingelegte Chipkarte in Anlage am Boden 5 des Aufnahmeraums 2 haltbar ist. Das in Einschubrichtung vordere Ende des Aufnahmeraums 2 wird durch einen vom Boden abstehenden Anschlag begrenzt, der hier als beim Auflaufen des vorderen Kartenrands betätigbarer Sensor 6 ausgebildet ist.

Die Abtasteinrichtung ist in einem hier durch strichpunktierte Linien lediglich angedeuteten Gehäuse 7 aufgenommen. Dieses ist mit einem auf der Höhe des Aufnahmeraums 2 angeordneten Schlitz 8 versehen, in den ein einen dem Aufnahmeraum 2 zugeordneten Einführspalt 9 enthaltendes Einlegemaul 10 eingesetzt ist. Dieses wird durch zwei aus dem Schlitz 8 nach hinten herausragende, den Einführspalt 9 zwischen sich einschließende, plattenförmige Maulteile 11, 12 gebildet.

Das untere Maulteil 11 ist als bündig an den Boden 5 anschließende, stationäre Platte ausgebildet, die an ihren seitlichen Randkanten und ihrer hinteren Randkante mit Randstegen 13, 14 versehen ist, so daß sich eine nach hinten und seitlich durch die Randstege 13, 14 begrenzte Mulde ergibt, in die das hintere Ende einer eingelegten Chipkarte absenkbar ist. Das obere Maulteil 12 ist als zungenförmige Klappe ausgebildet, die um eine zur Auflagefläche des unteren Maulteils 11 parallele Achse schwenkbar gelagert ist. Zur Bildung der Schwenkachse ist hier eine über die Breite durchgehende Stange 15 vorgesehen, die mit ihren seitlichen Enden auf durch fahnenartige Ansätze des unteren Maulteils 11 gebildeten Lagerböcken 16 aufgenommen ist und auf der das obere Maulteil 12 mit durch fahnenartige Ansätze 17 gebildeten Lagerböcken schwenkbar gelagert ist. In seitlicher Richtung ist die das obere Maulteil 12 bildende Klappe durch zwischen den Ansätzen 17 und den Lagerböcken 16 angeordnete Distanzbüchsen 180 verschiebesicher abgestützt.

Die das obere Maulteil 12 bildende Klappe ist mittels einer zugeordneten Stelleinrichtung an das untere, stationäre Maulteil 11 an bzw. von diesem abschwenkbar. In der in Figur 1 mit durchgezogenen Linien angedeuteten, abgeschwenkten Stellung ist der Einführspalt 9 geöffnet, so daß eine Chipkarte eingeschoben werden kann. Die seitlichen Randstege 13 des stationären Maulteils 11 können dabei als seitliche Führungselemente fungieren. Die Chipkarte wird so weit eingesteckt, bis ihr vorderes Ende auf den am in Einschubrichtung vorderen Ende des Aufnahmeraums 2 angeordneten Sensor 6 aufläuft. Der Abstand der hinteren Randstege 14 vom vorderen Sensor 6 entspricht etwa der Länge der zugeordneten Chipkarte zuzüglich Bewegungsspiel, so daß das hintere Ende der vollständig eingeschobenen Chipkarte in die durch die Randstege 13, 14 begrenzte Mulde eintaucht. Um die Chipkarte in dieser Position zu sichern, wird die das obere Maulteil 12 bildende Klappe an das untere Maulteil 11 angeschwenkt, wie in Figur 1 durch unterbrochene Linien angedeutet ist. In dieser angeschwenkten Stellung taucht die das obere Maulteil 12 bildende Klappe in die durch die Randstege 13, 14 begrenzte Mulde ein, wodurch die eingelegte Chipkarte zuverlässig gegen Herausziehen gesichert ist. Die hinteren Randstege 14 des stationären Maulteils 11 fungieren dabei als hintere Sperrklauen, die ein Zurückziehen der eingelegten Chipkarte durch Formschluß verhindern. Die seitlichen Randstege 13 versperren die Zugänglichkeit zum hinteren Ende einer eingelegten Chipkarte von der Seite her.

Die oben bereits erwähnte Stelleinrichtung zum Verschwenken der das obere Maulteil 12 bildenden Klappe besteht, wie am besten aus Figur 2 erkennbar ist, aus einem auf einem seitlichen, fahnenartigen Ansatz 17 des oberen Maulteils 12 aufgenommenen Motor 18, durch den eine auf einem gegenüberliegenden, fahnenartigen Ansatz 17 des Maulteils 12 gelagerte Welle 19 antreibbar ist, die einen Exzenterzapfen 20 trägt. Zur Aufnahme des Motors 18 und der Welle 19 sind die fahnenartigen Ansätze 17 des oberen Maulteils 12 über den Lagerbereich der als Schwenkachse fungierenden Stange 15 hinaus in Einschubrichtung nach vorne verlängert, so daß sich praktisch eine bezüglich der Schwenkachse zweiarmige Waage ergibt. Der Exzenterzapfen 20 liegt auf einem stationären Auflager 21 auf, dessen Höhe einstellbar ist. Hierzu kann, wie am besten aus Figur 1 erkennbar ist, einfach eine an einem seitlichen Vorsprung der das untere Maulteil 11 bildenden Platte gegen austauschbare Distanzelemente festlegbare Schraube vorgesehen sein. Zur Verringerung des Reibungswiderstands kann auf dem Exzenterzapfen 20 ein kugelgelagerter Laufring aufgenommen sein. Ebenso kann die Welle 19 mittels eines Kugellagers im zugeordneten Ansatz 17 gelagert sein. Der Motor 18 ist im zugeordneten Ansatz 17 befestigt. Um den Exzenterbolzen 20 in permanenter Anlage am stationären Auflager 21 zu halten, ist eine Anstellfeder 22 vorgesehen, die hier einerseits an einem Ansatz 17 des oberen Maulteils 12 und andererseits an einem gehäusefest angeordneten Teil, hier an der Platine 3, angreift.

Dem Motor 18 ist, wie Figur 1 zeigt, eine Steuerungseinrichtung 23 zugeordnet. Mittels dieser ist der Motor 18 so ansteuerbar, daß die das obere Maulteil 12 bildende Klappe abgesenkt wird, sobald eine Chipkarte richtig eingelegt ist, und angehoben wird, nachdem die Kommunikation mit der Chipkarte beendet ist. Bei einer vollen Umdrehung der vom Motor 18 angetriebenen Welle 19 und dementsprechend des hiermit verbundenen Exzenterzapfens 20 wird die das obere Maulteil 12 bildende Klappe einmal angehoben und abgesenkt. Bei nach unten gerichteter Exzentrizität des Exzenterzapfens 20 wird die Klappe abgesenkt und umgekehrt. Der Motor 18 braucht daher zum Anheben bzw. Absenken der Klappe nicht umgesteuert werden, sondern kann immer in einer Richtung drehen.

Um die obere bzw. untere Position der das obere Maulteil 12 bildenden Klappe festzustellen, ist die Welle 19 mit diesen Positionen zugeordneten, um 180° gegeneinander versetzten Positionsgebern 24 versehen, die durch zugeordnete Sensoren 25 abtastbar sind. Die Sensoren 25, der am hinteren Ende des Aufnahmeraums 2 angeordnete Sensor 6 sowie der Lesekopf 1 sind durch zugeordnete Signalleitungen mit der Steuereinrichtung 23 verbunden, welche die eingegebenen Signale in Steuerbefehle zum An- und Abschalten des Motors 18 umsetzt. Sobald die Vorderkante einer in den Aufnahmeraum 2 eingeschobenen Chipkarte den Sensor 6 betätigt, erhält die Steuereinrichtung 23 über die zugeordnete Signalleitung 26 die Meldung, daß eine Chipkarte vorhanden ist. Daraufhin wird der Motor 18 solange aktiviert, bis der der abgesenkten Stellung des oberen Maulteils 12 zugeordnete Sensor 25 anspricht. Die Steuereinrichtung 23 setzt die entsprechende, über die Signalleitung 27 ankommende Meldung in einem Stop-Befehl für den Motor 18 um. Sobald der Lesekopf 1 über die Signalleitung 28 das Ende eines Kommunikationsvorgangs an die Steuereinrichtung 23 meldet, wird der Motor 18 wieder aktiviert und läuft solange, bis der der angehobenen Stellung des oberen Maulteils 12 zugeordnete Sensor 25 anspricht. Das entsprechende Signal wird mittels der Steuereinrichtung 23 wiederum in einen Stopbefehl für den Motor 18 umgesetzt. Das obere Maulteil 12 bleibt dementsprechend in seiner angehobenen Position stehen. In dieser Position des oberen Maulteils 12 kann eine erledigte Chipkarte über den Spalt 9 entnommen bzw. eine neue Chipkarte über den Spalt 9 eingeführt werden. Diese Situation liegt der Figur 1 zugrunde.

## Patentansprüche

1. Vorrichtung zum Halten von Chipkarten in einer einer Abtasteinrichtung zugeordneten Position mit einer im Bereich eines Einführspalts (9) vorgesehenen Rückhalteeinrichtung, die ein Einlegemaul (10) mit zwei es begrenzenden Maulteilen (11, 12) aufweist und bei der eine Schwenkbewegung stattfindet, **dadurch gekennzeichnet daß** , das Einlegemaul (10) durch ein als schwenkbar angeordnete Klappe ausgebildetes Maulteil (12) und ein stationäres, die Klappe bei geschlossenem Einlegemaul (10) aufnehmendes, wannenförmiges Maulteil (11) gebildet wird, wobei das stationäre Maulteil (11) wenigstens eine das Schwenkbare Maulteil (12) geschlossenem Einlegemaul (10) hintergreifenden Sperrklane (14) aufweist, und daß das das schwenkbare Maulteil (12) auf einer zum Stationären Maulteil (11) parallelen Achse (15) schwenkbar gelagert und mit wenigstens einem über die Schwenkachse hinausreichenden Ansatz (17) versehen ist, an dem eine Stelleinrichtung angreift, mittels der das sckwenkbare Maulteil (12) in Abhängigkeit von der Anwesenheit einer Chipkarte und der Beendigung eines Kommunikationsvorgangs an das Stationäre Maulteil (11) an- bzw. von diesem abschwenkbar ist.

2. Vorrichtung nach Anspruch 1, **dadurch gekennzeichnet, daß** das stationäre Maulteil (11) unten angeordnet und mit seitlichen Randstegen (13) und wenigstens einem hinteren, die Sperrklane bildenden Randsteg (14) versehen ist.

3. Vorrichtung nach einem der vorhergehenden Ansprüche, **dadurch gekennzeichnet, daß** auf einem Ansatz (17) des schwenkbaren Maulteils (12) eine schwenkachsparallele Welle (19) aufgenommen ist, die einerseits mittels eines Motors (18) antreibbar ist und andererseits einen Exzenterzapfen (20) trägt, der unter der Wirkung wenigstens einer Anstellfeder (22) an einem stationären Auflager (21) in Anlage haltbar ist.

4. Vorrichtung nach Anspruch 3, **dadurch gekennzeichnet, daß** das Auflager (21) in der Höhe einstellbar ist.

5. Vorrichtung nach Anspruch 3 oder 4, **dadurch gekennzeichnet, daß** der Motor (18) an einem Ansatz (17) des schwenkbaren Maulteils (12) abgestützt ist.

6. Vorrichtung nach einem der vorhergehenden Ansprüche, **dadurch gekennzeichnet, daß** die Ansätze (17) des schwenkbaren Maulteils als fahnenartige Randstege ausgebildet sind.

7. Vorrichtung nach einem der vorhergehenden Ansprüche 3 bis 6, **dadurch gekennzeichnet, daß** die Welle (19) zwei um 180° gegeneinander versetzte Positionsgeber (24) aufweist, die mittels zugeordneter Sensoren (25) abtastbar sind.

8. Vorrichtung nach einem der vorhergehenden Ansprüche, **dadurch gekennzeichnet, daß** der Motor (18) mittels einer Steuereinrichtung (23) steuerbar ist, mittels der die Informationen der der Welle (19) zugeordneten Sensoren (25) und eines vom vorderen Kartenrand betätigbaren Sensors (6) sowie mindestens ein dem Ende des Abtastvorgangs zugeordnetes Signal zu Steuerbefehlen für den Motor (18) verarbeitbar sind.

9. Vorrichtung nach einem der vorhergehenden Ansprüche, **dadurch gekennzeichnet, daß** die das Einlegemaul (10) bildenden Maulteile (10,11) über einen auf der Höhe eines Aufnahmeraums (2) angeordneten Gehäuseschlitz (8) aus einem mit einer Abtasteinrichtung versehenen Gehäuse (7) herausragen.

## Claims

1. A device for holding chipcards in a position related to a scanning device having a retaining device in the area of an insertion gap (9), said retaining device comprising an insertion mouth (10) with two mouth parts (11, 12) limiting it and with a pivoting motion taking place, **characterized in that** said insertion mouth (10) is formed by a mouth part (12) being formed as an pivotably arranged flap and by a stationary trough-like mouth part (11) receiving said flap when said insertion mouth (10) being closed, said stationary mouth part (11) comprising at least one interlocking claw (14) reaching beyond said pivotable mouth part (12) when said insertion mouth being closed, and that said pivotable mouth part (12) is pivotably supported on an axis (15) being parallel to said staionary mouth part (11) and being provided with at least one stud (17) projecting beyond said pivoting axis, at which an adjusting device is acting by means of which said pivotable mouth part (12) being pivotable in dependence on the presence of a chipcard and on termination of a communication process to said stationary mouthpart (11) and away from it, resp.

2. A device according to claim 1, **characterized in that** said stationary mouth part (11) is arranged below and is provided with lateral edge shoulders (13) and at least one rear edge shoulder (14) forming the interlocking claw.

3. A device according to anyone of the preceding claims, **characterized in that** a shaft (19) being parallel to the pivoting axis is received on a stud (17) of the pivotable mouth part (12), said shaft being drivable on the one hand by means of a motor (18) and on the other hand carrying an eccentric pin (20) being kept adjacent to a stationary support (21) under the influence of at least one setting spring (22).

4. A device according to claim 3, **characterized in that** said support (21) is adjustable in height.

5. A device according to claim 3 or 4, **characterized in that** said motor (18) is rested on a stud (17) of said pivotable mouth part (12).

6. A device according to anyone of the preceding claims, **characterized in that** the studs (17) of the pivotable mouth part are formed as flag-like edge shoulders.

7. A device according to anyone of the preceding claims 3 to 6, **characterized in that** said shaft (19) comprises two position transmitters (24) being offset by 180° which may be scanned by means of related sensors (25).

8. A device according to anyone of the preceding claims, **characterized in that** said motor (18) is controllable by means of a control device (23) by means of which the informations of said sensors (25) related to said shaft (19) and of a sensor (6) actuatable by the front edge of a card as well as at least one signal related to the end of the scanning process may be processed to control commands for the motor (18).

9. A device according to anyone of the preceding claims, **characterized in that** said mouth parts (11, 12) forming the insertion mouth (10) project via a housing slot (8) being arranged in the height of a receiving space (2) out of a housing (7) being provided with a scanning device.

## Revendications

1. Dispositif pour maintenir des cartes à puces dans une position coordonnée avec un dispositif de lecture comportant un dispositif de retenue prévu dans la zone d'une fente d'introduction (9), qui comporte un orifice d'insertion (10) en deux parties (11, 12) la délimitant et où se produit un mouvement pivotant, **caractérisé en ce que** l'orifice d'insertion (10) est formée par une partie (12) consistant en un clapet pouvant pivoter et une partie (11) stationnaire en forme de cuve recevant le clapet lorsque l'orifice d'insertion (10) est fermé, la partie stationnaire (11) comportant au moins une griffe d'arrêt (14) passant derrière la partie pivotante (12) lorsque l'orifice d'insertion (10) est fermé, et en ce que la partie pivotante (12) est montée de façon pivotante sur un axe (15) parallèle à la partie stationnaire (11) comportant au moins une came (17) faisant saillie au-delà de l'axe de pivotement sur laquelle agit un dispositif de positionnement au moyen duquel la partie pivotante (12) peut s'approcher ou s'éloigner de la partie stationnaire en fonction de la présence d'une carte à puces et de la fin d'une opération de communication.

2. Dispositif selon la revendication 1, **caractérisé en ce que** la partie stationnaire (11) est montée en bas et équipée de barrettes latérales (13) et au moins une barrette arrière (14) formant la griffe d'arrêt.

3. Dispositif selon l'une des revendications précédentes, **caractérisé en ce que** sur une came (17) de la partie pivotante (12) est logé un arbre (19) parallèle à l'axe de pivotement qui peut d'une part être entraîné au moyen d'un moteur (18) et qui d'autre part porte une goupille excentrique (20) pouvant être maintenue sous l'effet d'au moins un ressort de réglage (22) prenant contact sur un appui stationnaire (21).

4. Dispositif selon la revendication 3, **caractérisé en ce que** l'appui (21) est réglable en hauteur.

5. Dispositif selon la revendication 3 ou 4, **caractérisé en ce que** le moteur (18) se trouve en appui sur une came (17) de la partie pivotante (12).

6. Dispositif selon l'une des revendications précédentes, **caractérisé en ce que** les cames (17) de la partie pivotante ont la configuration de barrettes en forme de fanion.

7. Dispositif selon l'une des revendications 3 à 6, **caractérisé en ce que** l'arbre (19) comporte deux transmetteurs de position (24) décalés de 180° l'un par rapport à l'autre dont la lecture est faite au moyen de capteurs (25).

8. Dispositif selon l'une des revendications précédentes, **caractérisé en ce que** le moteur (18) peut être commandé au moyen d'un appareil de commande (23) qui permet de traiter les informations provenant des capteurs (25) affectés à l'arbre (19) et d'un capteur (6) manoeuvrable par le bord avant de la carte, ainsi que d'au moins un signal affecté à la fin de l'opération de lecture afin d'obtenir des commandes pour le moteur (18).

9. Dispositif selon l'une des revendications précédentes, **caractérisé en ce que** les parties (10,11) formant l'orifice d'insertion (10) font saillie par rapport à une fente de boîtier (8) agencée à la hauteur de l'espace d'accueil (2) et dépassent un boîtier (7) équipé d'un dispositif de lecture.
